(19) Europäisches Patentamt
European Patent Office
Office européen des brevets

(11) Veröffentlichungsnummer: **0 023 565**
**B1**

# (12) EUROPÄISCHE PATENTSCHRIFT

(45) Veröffentlichungstag der Patentschrift: **18.01.84**

(51) Int. Cl.³: **G 11 B 5/58**, G 11 B 5/09

(21) Anmeldenummer: **80103508.0**

(22) Anmeldetag: **23.06.80**

(54) **Anordnung zur Spurlageregelung bei der Aufzeichnung/Wiedergabe von Informationen auf einem scheibenförmigen Magnetaufzeichnungsträger, insbesondere einer flexiblen Magnetfolie, und scheibenförmiger Magnetaufzeichnungsträger dafür.**

(30) Priorität: **13.07.79 DE 2928311**

(43) Veröffentlichungstag der Anmeldung:
**11.02.81 Patentblatt 81/6**

(45) Bekanntmachung des Hinweises auf die Patenterteilung:
**18.01.84 Patentblatt 84/3**

(84) Benannte Vertragsstaaten:
**DE FR GB IT NL**

(56) Entgegenhaltungen:
**DE - A - 2 439 546**
**DE - A - 2 533 512**
**DE - A - 2 837 623**
**US - A - 4 074 328**
**US - A - 4 148 080**

**IBM TECHNICAL DISCLOSURE BULLETIN, Band 18, Nr. 6, November 1975 New York M.R. CANNON "Transducer Positioning" Seiten 1728 bis 1729**
**Patents Abstracts of Japan, Band 1, Nr. 117, 6. Oktober 1977 Seite 4562E77**

(73) Patentinhaber: **BASF Aktiengesellschaft**
**Carl-Bosch-Strasse 38**
**D-6700 Ludwigshafen (DE)**

(72) Erfinder: **Hack, Joachim**
**Pfarrer-Friedrich-Strasse 34**
**D-6700 Ludwigshafen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 023 565 B1

# Anordnung zur Spurlageregelung bei der Aufzeichnung/Wiedergabe von Informationen auf einem scheibenförmigen Magnetaufzeichnungsträger, insbesondere einer flexiblen Magnetfolie, und scheibenförmiger Magnetaufzeichnungsträger dafür

Die Erfindung betrifft eine Anordnung zur Spurlageregelung bei der Aufzeichnung/Wiedergabe von Informationen auf einem scheibenförmigen Magnetaufzeichnungsträger, insbesondere einer flexiblen Magnetfolie, mittels eines Magnetkopfes, der über eine Kopfeinstellvorrichtung quer zu den Magnetspuren des Aufzeichnungsträgers lageeinstellbar ist, wobei im Zuge von mindestens einer Magnetspur wenigstens ein Servosignalmuster zur Einstellung der Istkopflage aufgezeichnet ist, das aus zwei gleich großen Teilen besteht, die in Aufzeichnungsrichtung hintereinander und bezüglich der Spurmitte derart angeordnet sind, daß bei Sollkopflage sich für beide Teile eine gleiche Anzahl von durch eine Auswerteschaltung auswertbaren Abtastsignalen, bei einer Spurabweichung sich hingegen gegensinnige Änderungen der Anzahlen der für beide Teile auswertbaren Abtastsignale ergeben, und wobei nach Abtastung des Servosignalmusters entsprechend der Differenz der für beide Teile gezählten Anzahlen von auswertbaren Abtastsignalen ein Steuersignal für die Kopfeinstellvorrichtung erzeugt wird, durch die der Magnetkopf in die Sollkopflage zurückstellbar ist, und einen scheibenförmigen Magnetaufzeichnungsträger dafür.

Eine derartige Anordnung ist aus der DE—A 2 837 623 bereits bekannt. Darin weisen die Servosignalmuster zwei Hälften mit positiv/negativ orientierten Servomarkierungen auf. Diese Servosignalmuster erstrecken sich kettenartig aneinandergereicht schräg über alle Datenspuren.

Aus der DE—A 2 439 546 ist eine Spurlageregelung für den Magnetkopf in einem Datenspeichersystem bekannt, bei dem neben oder innerhalb der Datenspur Servoinformationen gespeichert sind, die mittels eines Teils des Datenkopfes oder eines separaten Servokopfes gelesen und zur Kopflagesteuerung während des Schreib/Lesebetrieb benutzt werden.

Es ist ebenfalls bekannt, in einem Magnetscheibenspeichersystem, in dem die Magnetscheibenaufzeichnungsfläche in Sektoren eingeteilt ist, in jedem Sektor jeder Spur eigene Servoinformationen zu speichern und diese sur radialen Kopflageeinstellung der Magnetköpfe zu verwenden. Diese Servoinformationen werden nach Herstellung der Magnetscheibe aufgezeichnet und bleiben normalerweise über die Lebensdauer der Magnetscheibe unverändert gespeichert. Insbesondere enthalten die bekannten Servosignale (DE—A 2 619 601) in den Sektoren Informationen über die Exzentrizität und Formänderung der Magnetscheibe. Die bisher bekannten Servoaufzeichnungen sind entweder zu kompliziert oder technisch nicht zufriedenstellend.

Es ist Aufgabe der vorliegenden Erfindung, die Servosignale einer Anordnung zur Spurlageregelung zweckmäßig auszubilden, um ein einfaches Feststellen einer Spurlageab weichung und eine unverzögerte, genaue Spurlagenachstellung zu erreichen.

Die Aufgabe wird gemäß Patentanspruch 1 gelöst. Ein scheibenförmiger Magnetaufzeichnungsträger für das erfindungsgemäße System ist in Patentanspruch 8 angegeben.

Dabei ist es aus der DE—A 2 533 512 für mit Drehkopf abzutastende Magnetbänder an sich bekannt, daß die Abtastsignale der Servosignalmusterteile eine von der Istkopflage abhängige Amplitudenhüllkurve mit einem abfallenden oder ansteigenden Kurvenbereich aufweisen und von der Auswerteschaltung nur eine Mindestamplitude überschreitende Abtastsignale auswertbar sind.

Mit der erfindungsgemäßen Ausbildung des Servosignalmusters mit einer örtlich und elektrisch fest vorgegebenen Signalform ist ein problemloses und sicheres Erfassen der Abtastsignale und eine einfache Umwandlung in das Steuersignal und folglich eine unverzögerte Spurlage-Nachsteuerung für den Magnetkopf möglich.

In zweckmäßiger Ausgestaltung kann die Amplitudenhüllkurve der Abtastsignale der Servosignalmusterteile Dreiecksform aufweisen. Damit ergibt sich sehr einfach zu erfassende Signalform.

Prinzipiell kann das Servosignalmuster aus einem Impulsmuster in der Spur mit einem zumindest teilweise schrägzur Spur verlaufenden Abstandsbereich bestehen. Damit ergeben sich sehr einfache Herstellungsmöglichkeiten dafür.

Zum einen kann ein solcher Bereich, Dreieck oder Streifen, durch Teillöschung des Impulsmusters gebildet werden, zum anderen kann auch der Abstandsstreifen aus einem Impulsmuster zwischen schräg zur Spur gelöschten Nachbarbereichen gebildet sein. Ein solcher Abstandsbereich oder -streifen ist auch durch Überschreiben eines Impulsmusters oder durch streifenförmiges Entfernen der Magnetschicht herstellbar.

Die erfindungsgemäßen Servosignalmusterteile können einmal über mittels ansteigenden oder abfallenden Schreibstroms erzeugt Amplitudenänderungen erzeugt werden.

Es ist auch möglich, die Servosignalmusterteile über zeitlich ungleichmäßiges An- und Abschalten des Schreibstroms erzeugte Flußwechsel, mit unterschiedlichen Flußwechselabständen zur erzeugen.

Wie schon oben erwähnt können Servosignalmusterteile sehr günstig auch durch zur Spurmittelachse schräges Anlöschen eines Impulsmusters in der Spur gebildet werden.

Es kann auch zweckmäßig sein, daß die Servosignalmusterteile durch einen gelöschten Sicherheitsstreifen Voneinander getrennt sind.

Vorteilhaft im Hinblick auf einen möglichst fehlerlosen Signallesebetrieb ist es, innerhalb jeder Magnetspur mehrere Paare von Signalfolgen vorzusehen. Wenn eine optimale Anzahl von Kennsignalen z.B. in jeder Kreisspur einer kreisförmigen Magnetfolie verwendet werden, ist eine ständige automatische Kontrolle der materialbedingten Formänderungen der Folie möglich, die ebenfalls mit einer selbsttätigen Kopflagenachstellung in Verbindung steht, so daß sowohl der Schreib- als auch der Lasebetrieb nahezu ohne Einfluß dieser Fehler erreichbar wird.

Ein scheibenförmiger Magnetaufzeichnungsträger, insbesondere eine flexible Magnetfolie, für die erfindungsgemäße Anordnung zur Spurlageregelung kann über den Umfang einer Magnetspur verteilt mehrere, insbesondere 26, Servosignalmuster aufweisen.

Mit der erwähnten mehrfachen Verwendung derartiger Servosignalmuster in einer Spur—bei einer Magnetplatte oder -folie eine Kreisspurist eine erhebliche Kapazitätserhöhung auf den Aufzeichnungsträgern erreichbar, da die zur Verfügung stehenden Aufzeichnungsflächen nahezu lückenlos benutzbar sind und die Fehlerrate aufgrund mangelnder Kopfpositionierung sehr klein gehalten werden kann.

Um möglichst view von der gesamten Ausdehnung des Aufzeichnungsträgers zur Spurnachregelung zu erfassen, ist es günstig, wenn die schrägen, z.B. streifenförmigen Bereiche des Servosignalmusters auf verschiedenen Querachsen zu den Spuren des Aufzeichnungsträgers lokalisiert sind.

Einzelheiten von Ausführungsbeispielen von erfindungsgemäßen Anordnungen zur Spurlageregelung und einem erfindungsgemäß ausgebildeten Aufzeichnungsträger sind folgender Beschreibung und Zeichnung zu entnehmen.

In der Zeichnung stellen dar:

Fig. 1 Blockschaltbild des Lesekreises in einem Magnetaufzeichnungsspeicher

Fig. 2 Format einer Aufzeichnungsspur in einem Magnetfolienspeichersystem

Fig. 2a Teil der Aufzeichnungsspur gemäß Figur 2 mit einem erfindungsgemäßen Servosignalmuster

Fig. 2b eine weitere Ausführung eines Servosignalmusters teilweise bestehend aus Treppenimpulsen

Fig. 3a ein Servosignalmuster gemäß Fig. 2a

Fig. 3b eine Reihe von Lesekopfspaltlagen in Relation zum Servosignalmuster

Fig. 3c Anzahl der gelesenen Abtastsignale in Abhängigkeit von verschiedenen Kopfspaltlagen gemäß Fig. 3b

Fig. 4a—e Zeitdiagramme für ein Initialisieren eines Aufzeichnungsträgers mit Servosignalmustern gemäß vorliegender Erfindung

Fig. 5 eine Ausbildung einer Schreib-/Lese- und Servo-Kopfkombination zum Initialisieren eines Aufzeichnungsträgers

Fig. 6 Ein Blockschaltbild einer Auswerte- und Klopflagenachsteuerungschaltung für die Abtastsignale

Fig. 7a eine Variante des Servosignalmusters in räumlicher Darstellung

Fig. 7b eine Hälfte des Servosignalmusters als abgetastetes elektrisches Signal

Ein Daten-Aufzeichnungs/Wiedergabesystem, in dem die erfindungsgemäße Spurlageregelung und der erfindungsgemäß ausgebildete Magnetaufzeichnungsträger anwendbar sind, wird am Beispiel eiens Magnetfolienspeichers (Floppy Disk Laufwerk) im folgenden schematisch beschrieben.

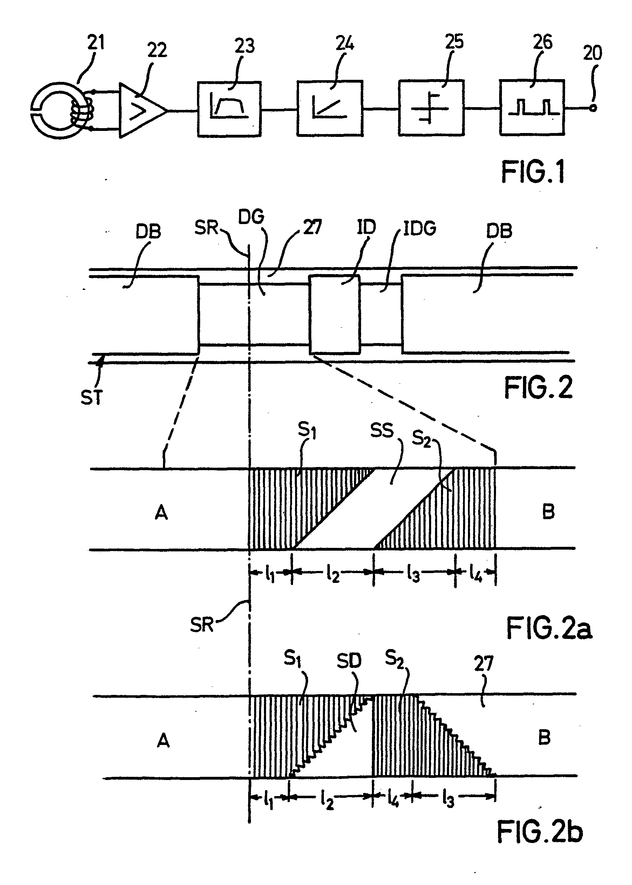

Der Lesekanal eines solchen Speichers besteht gemäß Figur 1 aus der Reihe von folgenden Baustufen:

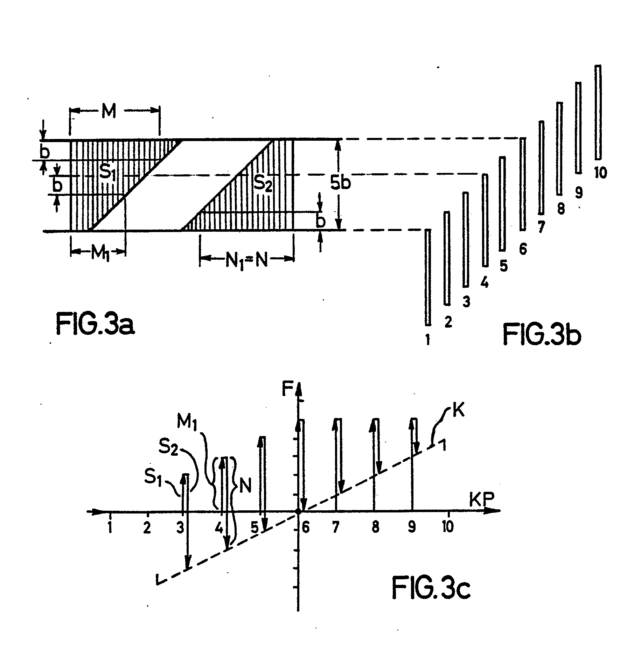

Lesekopf 21, Leseverstärker 22, Rauschunterdrückungsfilter 23, Differenzierer 24, Nullstellendetektor 25, Impulsformer 26 und Ausgangsklemme 26. Das in der Lesekopfwicklung induzierte Lesesignal wird somit verstärkt, von NF- und HF-Rausch- und Störsignalen befreit durch Begrenzen des Frequenzbereichs, dann erfolgt Differenzieren des Nutzsignals, dessen Information in der Lage der Impulsspitzen enthalten ist, so daß die Lage der Impulsspitzen in Null-Durchgänge umgesetzt werden. Im Nullstellen-Detektor wird aus dem differenzierten Signal ein Rechtecksignal hergestellt, das nachfolgend in eine Folge schmaler Leseimpulse umgewandelt wird, die am Ausgang 20 bereitstehen. Beim Herstellen des Rechtecksignals wird eine Mindestsignalamplitude eingestellt, um einen von Rausch- und Störanteilen freies Lesesignal zu erhalten. Es erfolgt eine Amplitudenbegrenzung bei ca. 1/10—1/3 der Maximalleseamplitude, in der Weise, daß nur Leseimpulse größerer Amplitude erfaßt werden. Um eine derartige Mindestleseimpulsamplitude zu erhalten, wird eine Mindestlesespurbreite b (s. Fig. 3a) festgelegt. Ist diese Spurbreite b unterschritten, stimmt die Leseimpulsfolge am Ausgang 20 nicht mehr mit der geschrießenen Signalfolge überein.

Eine kreisförmige Magnetfolie (auch als FlexyDisk® (Warenzeichen der BASF Aktiengesellschaft) bezeichnet, trägt Datenspuren, deren Formatierung genormt ist. Eine Datenspur 27 besitzt 26 Sektoren mit jeweils einer Sektor-Kenninformation (ID), die aus 13 Bytes besteht, einer Kennlücke IDG, bestehend aus 11 Bytes und dem Datenblock (DB) mit 137 Bytes sowie der Spurlücke (DG). In Figur 2 sind diese Formatblöcke dargestellt.

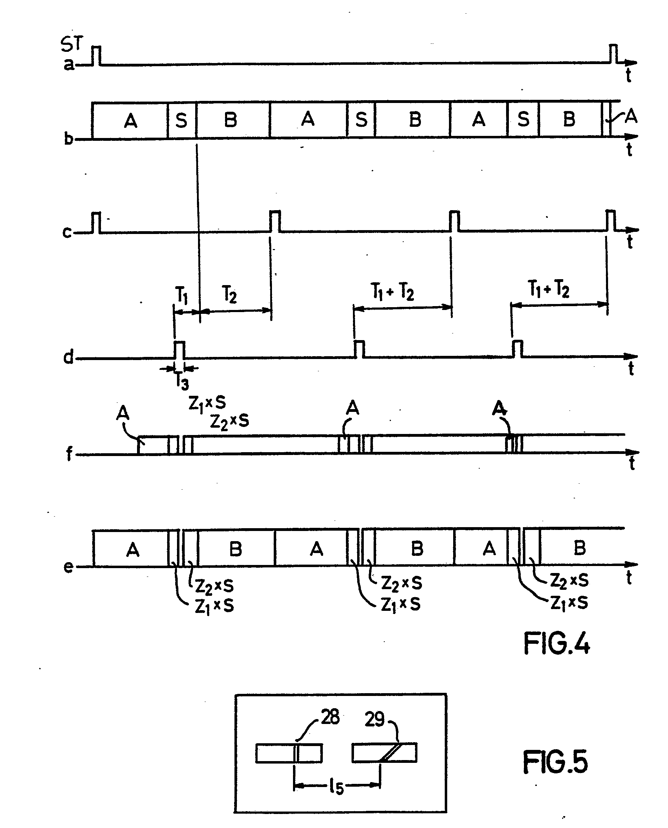

In der Spurlücke DG ist gemäß vorliegender Erfindung ein Servosignalmuster für die Spurlageregelung vorgesehen, wodurch das Datenformat keineswegs gestört wird. Die Initialisierung einer Datenspur 27 kann beispielsweise wie folgt ablaufen. Getriggert durch ein Spurstartsignal ST (Fig. 4a), das durch eine Indexmarkierung an der Aufzeichnungsscheibe oder durch eine Fehlstelle auf der Magnetfolie erzeugbar ist, werden als Sektorkennung fort-

laufen 80×A-Bytes, 30×S-Bytes (Servo-Bytes) und 78×B-Bytes mit dem Schreib-/Lesespalt z.B. eines A/W-Kopfes in Figur 5 aufgezeichnet. Dabei sind A-, B- und S-Bytes einfach voneinander unterscheidbare Signale mit jeweils vorgegebenem Signalmuster. Nach den letzten B-Bytes werden bis zum Erkennen des nächsten Spurstartsignals A-Bytes geschrieben. Beim nächstfolgenden Umlauf werden im Lesebetrieb mit dem Lesekanal gemäß Figur 1 die geschriebenen Datenmuster erkannt und kontrolliert. Beim Erkennen eines jeden Signalübergangs von B- zu A-Bytes wird ein Verzögerungszeitgenerator für eine Zeitdauer T1 gestartet. Nach Ablauf der Zeit T1 wird dann dem Löschkopf gemäß Fig. 5 ein Löschstrom für die Löschdauer T3 zugeführt. Infolge des geometrischen Abstands l5 zwischen Lesespalt 28 und schrägem Löschspalt 29 (Fig. 5) entsteht eine zeitliche Verzögerung T2, die in Verbindung mit T1 den Löschstrom zeitlich so steuert, daß er erst im Bereich der S-Bytes wirksam wird. Die S-Bytes-Bereiche (Servosignalmusterteile) werden durch die schräge Löschspaltanordnung gemäß Figur 2a (hier: streifenförmig) teilgelöscht. Die Zeitdauer T1 wird bei durch den Abstand der Kopfspalte 28 und 29 vorgegebener Zeitdauer T2 so eingestellt, daß die Länge l1 (Fig. 2a) die für das jeweils verwendete Format optimale Länge, im vorliegenden Beispiel von l1=0 bis 2 Bytes besitzt. Mit l1 ist der räumliche Abstand zwischen der Sektorreferenzlinie (SR), die etwa durch die Mitte der Spurlücke DG verläuft, und dem Beginn des gelöschten schrägen Streifens SS, der eine wichtige Signaleigenart der erfindungsgemäßen Servoinformation darstellt, bezeichnet. Die Zeitdauer T1 kann auch leicht von Spur zu Spur variiert werden, so daß die Länge l1 für alle Spuren—auch bei Kreisspuren unterschiedlicher Länge—eingehalten werden kann.

Die Löschzeit T3 wird zweckmäßig so bemessen, daß eine Löschlänge l2 (Fig. 2a) von ca. 2 bis 16 Bytes entsteht. Nach diesem Löschvorgang sind, vorgegeben durch die Empfindlichkeit des Lesekreises (Fig. 1), noch folgende Informationen aus den Feldern der 30×S-Bytes lesbar:

eine Zahl von Z1×S-Bytes aus der Länge l1 und dem noch lesbaren Teil von l2

eine Zahl von Z2×S-Bytes aus der Länge 14 und dem noch lesbaren Teil von l3

Wie schon oben bemerkt, läßt sich die Lesbarkeitsgrenze auf ca. 1/10 bis 1/3 der Normalamplitude der Datensignale einstellen.

In Figur 4e ist der Informationsinhalt einer Spur, der nach dem Schräglöschen erhalten wird, dargestellt.

Während des nächsten Umlaufs der Magnetfolie wird die Anzahl (Z1) der lesbaren S-Bytes bis zum Signalausfall durch Auftreten des Schrägstreifens SS festgestellt und danach diese mit der Anzahl S-Bytes (Z2) verglichen. Wenn Sollspurlage vorliegt, wird Übereinstimmung der Anzahlen Z1=Z2 festgestellt, so daß der Schreibbetrieb eingeschaltet werden kann und der Sektor, bestehend aus Sektor-Kennimpuls ID, Kennlücke IDG und Datenblock DB fortlaufend initialisiert wird. Nach dem Initialisiervorgang des Sektors wird der Schreibbetrieb gestoppt, so daß noch einige A-Bytes (ca. 9 Bytes) bis zum Erkennen des darauffolgenden S-Bytes-Feldes (Servosignalmusters) bestehen bleiben. Dieser Vorgang wiederholt sich für jeden Sektor bis schließlich alle Sektoren initialisiert sind (s. Figuren 4f und e) Die Wahl der geschriebenen Bytes erfolgt unter dem Gesichtspunkt der Unterscheidbarkeit, so daß räumlich und zeitlich unterschiedliche Flußwechsel in der Magnetschicht den A-, B- und S-Bytes zugeordnet sind.

Im Anwendungsfall, also bei Vorliegen eines Aufzeichnungsträgers, der mit einem obenbeschriebenen Servosignalmuster versehen ist, wird wie folgt verfahren.

In Figur 3a ist ein Teil einer mit einem Servosignalmuster beschriebenen Spur 27 gemäß Fig. 2a dargestellt. Rechts daneben zeigt Figur 3b zehn verschiedene Lagen eines Lesekopfspaltes 28. Die Mindestlesespurbreite eines noch als dekodierbares Datensignal erkennbares Signal beträgt b. Die Gesamtspurbreite beinhaltet in diesem Beispiel 5b. Liest man die Spur 27 mit einem Lesekreis nach Figur 1 in einer beliebigen Kopflage (1 bis 10 in Figur 3b) so sind aus der Gruppe der S1-Bytes eine Anzahl von M1 Bytes und aus der Gruppe der S2-Bytes eine Anzahl von N1 Bytes zu identifizieren. Stimmt die Lesespur mit der Schreibspur identisch überein (Kopfspaltlage 6) in Fig. 3b so sind die Anzahlen M1=M=N1=N.M und N sind bei verschiedenen Magnetaufzeichnungsträger-Laufwerken nicht notwendigerweise mit Z1 und Z2 gemäß Figur 4 identisch, da normalerweise jede Verstärkerkette eine unterschiedliche Empfindlichkeit besitzt, so daß es als Vorteil angesehen werden muß, daß die Verstärkerempfindlichkeit das Spurlagen-Steuersignal nicht beeinflußt. Liest man die S1, S2-Signalmuster in Figur 3 entsprechend einer Lesekopfposition (Kopflage 4) in Figur 3b so wird nur noch eine Zahl von M1 Bytes des S1-Signalmusters erkannt, vom S2-Signalmuster wird noch eine Zahl von N1=N Bytes erkannt. Aus der Differenz F=M1−N1 der gelesenen Bytes läßt sich eine Kennlinie (Gerade K) gemäß Figur 3c ermitteln, wobei jeder der möglichen Lesekopfpositionen (KP) (1 bis 10) in Fig. 3b, S2-Bytes zugeordnet sind. Die Abweichung der Lesespur von der Schreibspur, wobei letztere durch das Initialisieren festgelegt ist, ist der Differenz F=M1−N1 (in diesem Beispiel der Kopflage 4) betragsmäßig proportional, die Phase oder Richtung der Abweichung wird durch das Vorzeichen der Differenz definiert. Werden die M1 und N1 Bytes-Anzahlen einer elektronischen Zählschaltung zugeführt, so daß die M1 Bytes den Zähler weiterschalten und die N1 Bytes den Zähler schrittweise zurückschalten, so wird als Ergebnis eine Zahl von F=M1—N1 Bytes erhalten, die die Spurabweichung darstellt und die nun mittels bekannter Schaltungen zur Spurlage-Nachregelung des Lesekopfes benutzbar ist.

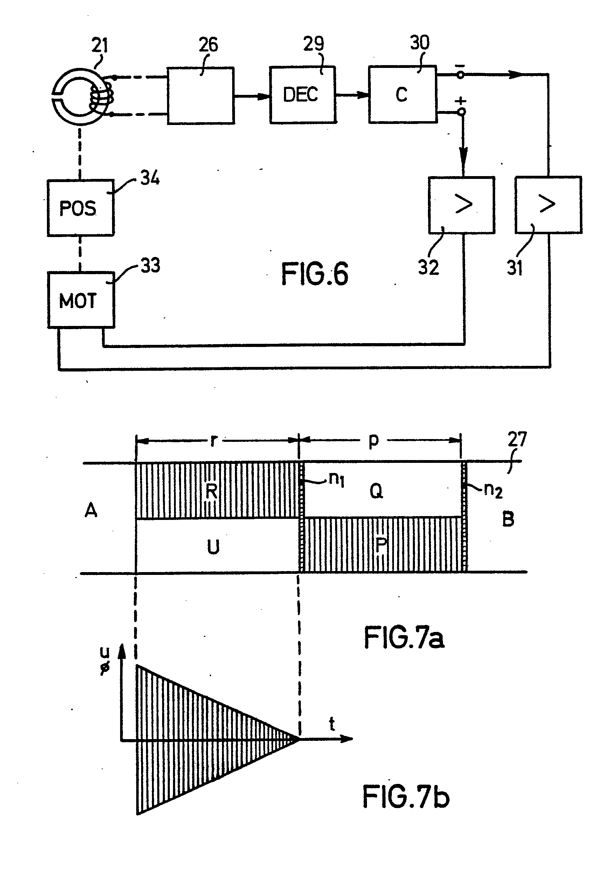

Eine solche Schaltung ist schematisch in Figur 6 dargestellt. Darin ist dem Lesekopf 21 die Impulsformstufe 26, ein Dekoder (DEC) 29 für die S-Bytes, sowie eine Zählschaltung, symbolisiert durch eine FlipFlop-Anordnung 30, nachgeschaltet, die einen negativen und positiven Ausgang aufweisen sollen. Über nicht dargestellte D/A-Wandler und folgende separate Verstärker 31 und 32 wird üblicherweise ein Servo-Gleichstrom-Motor (MOT) 33 angesteuert, der seinerseits z.B. innerhalb von 3 msec eine Lageeinstellvorrichtung (POS) 34 für den Lesekopf 1 steuert. Die Lageeinstellung des Lesekopfes 21 erfolgt mittels geeigneter Einrichtungen, z.B. direkt über den Kopfpositionierer des benutzten Laufwerks.

Der Dekoder DEC 29 erkennt die Informationstypen A-, B- oder S-Bytes und erfaßt die Informationsübergänge. Folgt einem ersten S-Signalmuster ein A- oder B-Signalmuster wird nicht reagiert, da z.B. eine Fehlinformation vorliegen kann. Folgt einem ersten S-Signalmusterteil ein zweiter S-Signalmusterteil, so werden die S-Signale bis zu einer vorgegebenen Pause oder bzw. bei Wiedererreichen der Signallesbarkeitsgrenze, z.B. mittels des Zählers C, addiert und nach der Pause, bzw. bei Wiedererreichen der Signallesbarkeit, wird der Zähler durch die folgenden S-Signale schrittweise zurückgestellt, die folgenden S-Signale (Z2) werden somit subtrahiert.

Oben wurden die Herstellungschritte für ein Servoinitialisieren eines Magnetaufzeichnungsträgers sowie die Steuerung der Kopflage des Lesekopfes bis zur Kompensation eines eventuellen Kopflagefehlers beschrieben. Das Servosignalmuster tion enthält dabei als Kern einen zum Spurverlauf zumindest zum Teil schräg verlaufenden Bereich SS oder SD mit einer zu den Nachbargebieten unterschiedlichen Magnetisierung, die bei Abtasten unterschiedliche elektrische Impulsmuster ergibt.

Der Streifen SS oder das Dreieck SD kann ein magnetisch gelöschter Bereich innerhalb eines vorgegebenen festen Impulsmusters, aber auch ein Impulsbereich innerhalb eines gelöschten Bereichs sein. Der Streifen SS kann ferner ein mittels eines Signals streifenförmig überschriebener Bereich als auch ein Bereich auf dem Magnetaufzeichnungsträger sein, dessen Magnetschicht streifenförmig (SS) oder in anderer geometrischer Form (SD s. Fig. 2b) entfernt wurde. Ein magnetisch gelöschter Streifen oder z.B. eine Dreiecksfläche, der oder die von Gerät zu Gerät anders geartet sein kann, ist einem einmalig auf einem Aufzeichnungsträger anzubringenden und nicht einfach entfernbaren Zeichen vorzuziehen, wenn ein Initialisieren der Servosignalmuster beim Anwender beabsichtigt ist, ansonsten ist ein Initialisieren gleich beim Hersteller vorzuziehen.

Der Streifen (SS) oder die Schräglinie (SD) kann z.B. im Winkel von ca. 20 bis 70° zur Spurquerachse verlaufen.

Die Kanten des Streifens SS können wie in Figuren 2a und 3a gezeigt geradlinig verlaufen, sie können jedoch auch treppenförmig sein (Fig. 2b) durch Herstellung über schrittweises Löschen mit dem Schreib-Lesespalt bei abschnittsweise unterschiedlicher Spurlage (ähnlich Fig. 3b) des Kopfspaltes. Beispielsweise läßt sich diese Schreib-Lesekopfverschiebung relativ zur Spur mittels einer Kopfschrittvorrichtung erreichen, deren Einzelschritte Bruchteile der Spurbreite betragen.

In Figur 7a ist ein Servosignalmuster dargestellt. Darin sind die Magnetisierungsbereiche R und P unsymmetrisch zur Spurmitte, aber, lediglich über einen schmalen gelöschten Sicherheitsstreifen n1 getrennt, aufeinanderfolgend ausgebildet. Eine solche magnetische Aufzeichnung ergibt ein Lesesignal gemäß Figur 7b, wobei die Amplituden jedes Signalbereichs R und P von ihrem Maximum bis Null kontinuierlich abnehmen. Ein solcher Amplitudenabfall ist bei der Initialisierung eines Aufzeichnungsträgers durch entsprechende Veränderung der Größe des Schreibstroms, durch schräges Anlöschen ähnlich obigem Beispiel oder unterschiedliche Flußwechselabstände durch zeitlich ungleiches An- und Abschalten des Schreibstroms erzeugbar. Die Bereiche Q und U sind zweckmäßig magnetisch gelösicht.

Die Spurlagen-Servosignalmuster gemäß Figur 7 sind folgendermaßen herstellbar, was am Beispiel einer Magnetspur einer Magnetkreisfolie erläutert wird.

1. Folie löschen. Sollspurlage einstellen
2. In Sollspurlage mit Schreibkopf 2 A-Bytes schreiben, danach im Abstand a=r+p+n1+n2 5 B-Bytes schreiben
3. Spurlage obere Spurhälfte (ca. 180 $\mu$m Versatz bei flexiblen Magnetfolien). Nach Lesen von 1 A-Byte Schreiben des Servosignalmusters im Bereich R mit abklingenden Amplituden erzeugt nach einem der angegebenen Verfahren, Zone Q nicht beschriften.
4. Spurlage untere Spurhälfte (ca. —180 $\mu$m Versatz bei flexiblen Magnetfolien). Nach Lesen von 1 A-Byte Schreiben des Servosignalmusters nach einer Verzögerungszeit—entsprechend der Strecke r—im Bereich P mit abklingenden Amplituden entsprechend einem der aufgeführten Verfahren.
5. Sollspurlage des Scheibkopfes und des Tunnellöschkopfes. Tunnel-Löschen der gesamten Spur und damit Erzeugen der Spurbreite gemäß Figur 7a.
6. Sollspurlage, Lesen der Servo-Signalmuster R und P, Zählen der erkennbaren Impulsanzahlen von R und P; bei ungleichen Zahlen Korrektur durch Neuinitialisierung.

Die weiteren Maßnahmen, Aufzeichnen der Datensignale, Lesen und Auswerten der Abtastsignale und Nachregeln der Kopflage können wie bereits oben beschrieben erfolgen.

Gemäß vorliegender Spurlageregelung ist es möglich, beliebig oft innerhalb einer Magnetspur die momentane, von der Sollkopflage abweichende Ist-Kopflage zu erfassen und die Sollkopflage einzustellen. Bei Magnetfolien, Floppy-oder FlexyDisks ist es bei 26-maliger Nachsteuerung der Kopflage pro Kreisspur möglich, während einer Umdrehung der Folie eine Exzentrizität von 50 $\mu$m auszuregeln. Die dazu notwendige Initialisierung der Folie oder der Magnetplatte kann sowohl direkt beim Hersteller als auch erst beim Anwender vorgenommen werden. Neben einer Verringerung der Fehlerrate bei der Datenspeicherung mit flexiblen Aufzeichnungsträgern ist eine Erhöhung der Spurdichte, z.B. bei FlexyDisks auf wenigstens das 3-fache möglich.

**Patentansprüche**

1. Anordnung zur Spurlageregelung bei der Aufzeichnung/Wiedergabe von Informationen auf einem scheibenförmigen Magnetaufzeichnungsträger, insbesondere einer flexiblen Magnetfolie, mittels eines Magnetkopfes (21), der über eine Kopfeinstellvorrichtung (33, 34) quer zu den Magnetspuren des Aufzeichnungsträgers lageeinstellbar ist, wobei im Zuge von mindestens einer Magnetspur wenigstens ein Servosignalmuster (S) zur Einstellung der Istkopflage aufgezeichnet ist, das aus zwei gleich großen Teilen (S1 u. S2, R u. P) besteht, die in Aufzeichnungsrichtung hintereinander und bezüglich der Spurmitte derart angeordnet sind, daß bei Sollkopflage sich für beide Teile eine gleiche Anzahl von durch eine Auswerteschaltung (Fig. 1) auswertbaren Abtastsignalen, bei einer Spurabweichung sich hingegen gegensinnige Änderungen der Anzahlen der für beide Teile (S1 u. S2, R u. P) auswertbaren Abtastsignale ergeben, und wobei nach Abtastung des Servosignalmusters (S) entsprechend der Differenz der für beide Teile gezählten Anzahlen von auswertbaren Abtastsignalen ein Steuersignal für die (Kopfeinstellvorrichtung erzeugt wird, durch die der Magnetkopf (21) in die Sollkopflage zurückstellbar ist, dadurch gekennzeichnet,

a) daß das Servosignalmuster (S) in einer Datenspurlücke (DG) und nur innerhalb der Datenspurbreite aufgezeichnet ist,
b) daß die Abtastsignale der Servosignalmusterteile (S1 u. S2, R u. P) eine von der Istkopflage abhängige Amplitudenhüllkurve mit einem ersten abfallenden und einem zweiten abfallenden oder ansteigenden Kurvenbereich aufweisen und von der Auswerteschaltung (Fig. 1) nur eine Mindestamplitude überschreitende Abtastsignale auswertbar sind,
c) daß die Anordnung zur Zählung der auswertbaren Abtastsignale in Abhängigkeit von den Ausgangssignalen eines, Anfang und Ende des Servosignalmusters (S) erkennenden Dekoders (29) sowie nach einer Pause zwischen einer und der nächstfolgenden Auswertung von Abtastsignalen schaltbar ist.

2. Anordnung nach Anspruch 1, dadurch gekennzeichnet, daß die Amplitudenhüllkurve der Abtastsignale der Servosignalmusterteile (S1 u. S2, R u. P) Dreiecksform aufweist.

3. Anordnung nach Ansprüchen 1 oder 2, dadurch gekennzeichnet, daß die Signalmusterteile (S1 u. S2, R u. P) über mittels ansteigenden oder abfallenden Schreibstroms erzeugte Amplitudenänderungen erzeugt werden.

4. Anordnung nach Anspruch 1 oder 2, dadurch gekennzeichnet, daß die Servosignalmusterteile (S1 u. S2, R u. P) über zeitlich ungleichmäßiges An- und Abschalten des Schreibstroms erzeugte Flußwechsel, mit unterschiedlichen Flußwechselabständen erzeugt werden.

5. Anordnung nach Anspruch 1, dadurch gekennzeichnet, daß die Servosignalmusterteile (S1 u. S2, R u. P) durch zur Spurmittelachse schräges Anlöschen eines Impulsmusters (Abstandsbereich SS oder SD) in der Spur (27) gebildet werden.

6. Anordnung nach Anspruch 1 oder einem der Ansprüche 2 bis 5, dadurch gekennzeichnet, daß die Servosignalmusterteile (S1 u. S2, R u. P) durch einen gelöschten Sicherheitsstreifen (n1, n2) voneinander getrennt sind.

7. Anordnung nach einem oder mehreren der Ansprüche 1 bis 6, dadurch gekennzeichnet, daß in jeder Magnetspur (27) mehrere Servosignalmuster (S) vorgesehen sind.

8. Scheibenförmiger Magnetaufzeichnungsträger, insbesondere flexible Magnetfolie, für eine Anordnung zur Spurlageregelung nach einem der Ansprüche 1 bis 7, wobei über den Umfang einer Magnetspur (27) verteilt mehrere, insbesondere 26, Servosignalmuster (S) vorgesehen sind.

**Revendications**

1. Dispositif de réglage en position par rapport à une piste de système d'enregistrement/reproduction d'informations sur un support d'enregistrement magnétique en forme de disque, en particulier une feuille magnétique souple, au moyen d'une tête magnétique (21) déplaçable, par l'intermédiaire d'un moyen de réglage de tête (33, 34), transversalement aux pistes magnétiques du support d'enregistrement, au moins un modèle de signal d'asservissement (S) étant enregistré sur le passage d'au moins une piste magnétique, pour le réglage de la position de tête réelle, modèle qui est constitué de deux parties de même grandeur (S1 et S2, R et P) qui, dans la direction d'enregistrement, sont situées l'une derrière l'autre, et disposées, par rapport à l'axe de la piste, de façon que, pour la position de tête nominale, il s'ensuit, pour les deux parties, un même nombre de signaux de lecture exploitables par un circuit d'interprétation (fig. 1), et que, pour un écart par rapport à la piste, il s'ensuit, au contraire, des différences en sens contraires du nombre de signaux de lecture exploitables par les deux parties (S1 et S2, R et P), et, après exploration du modèle de signal d'asservissement (S), un signal de commande pour le moyen de réglage de tête étant produit en fonction de la différence entre les nombres de signaux d'exploration exploitables décomptés sur les deux parties, signal de commande grâce auquel la tête magnétique (21) peut être ramenée en position nominale, caractérisé par le fait que;

a) le modèle de signal d'asservissement (S) est enregistré dans une lacune de la piste de données (DG) et seulement à l'intérieur de la largueur de la piste
b) les signaux d'exploration des parties de modèle de signal d'asservissement (S1 et S2, R et P) ont une enveloppe d'amplitudes dépendant de la position de tête réelle et comportant une première zone descendante et une seconde zone descendante ou montante et, par le circuit d'interprétation (fig. 1), ne sont exploitables que des signaux d'exploration dépassant une amplitude minimale
c) le moyen de comptage des signaux d'exploration exploitables peut être mis en circuit en fonction des signaux de sortie d'un décodeur (29) identifiant le début et la fin du modèle (S) ainsi qu'après une pause entre une exploitation de signaux d'exploration et l'exploitation suivante

2. Dispositif suivant la revendication 1 caractérisé par le fait que l'enveloppe d'amplitudes des signaux d'exploration des parties du modèle de signal d'asservissement (S1 et S2, R et P) est de forme triangulaire.

3. Dispositif selon la revendication 1 ou 2 caractérisé par le fait que les parties de modèle de signal (S1 et S2, R et P) sont obtenues par des variations d'amplitudes produites au moyen de courant d'inscription croissant ou décroissant.

4. Dispositif selon la revendication 1 ou 2, caractérisé par le fait que les parties du modèle de signal d'asservissement (S1 et S2, R et P) sont produites par inversion de flux, à écarts d'inversion différents, obtenus par branchement et coupure irréguliers, dans le temps, du courant d'inscription.

5. Dispositif selon la revendication 1, caractérisé par le fait que les parties de modèle de signal d'asservissement (S1 et S2, R et P) sont formées par effacement, en oblique par rapport à l'axe de la piste, d'un modèle d'impulsions (zone d'intervalle SS ou SD) dans la piste (27).

6. Dispositif selon la revendication 1 ou l'une des revendications 2 à 5 caractérisé par le fait que les parties de modèle de signal d'asservissement (S1 et S2, R et P) sont séparées l'une de l'autre par une bande de sécurité (n1, n2) effacée.

7. Dispositif selon l'une ou plusieurs des revendications 1 à 6 caractérisé par le fait que, dans chaque piste magnétique (27), sont prévus plusieurs modèles de signal d'asservissement (S).

8. Support d'enregistrement magnétique en forme de disque, en particulier de feuille magnétique souple, pour dispositif de réglage en position par rapport à une piste selon l'une des revendications 1 à 7 dans lequel sont prévus plusieurs, en particulier 26, modèles de signal d'asservissement (S) répartis à la périphérie d'une piste magnétique (27).

**Claims**

1. A servo arrangement for head positioning during the recording/reproduction of information on a magnetic disc record, particularly on a floppy disc, by means of magnetic head (21), the position of which can be adjusted transversely with respect to the magnetic tracks of the recording medium by means of a head positioning device (33, 34), at least one servo signal pattern (S) for ascertaining the momentary head position being recorded within or beneath at least one magnetic track, which signal pattern consists of two similar pulse sequences (S1 and S2; R and P) which are located behind one another in the recording direction and so arranged with respect to the track center that, when the head is in the correct position above the track center, the same number of pulses, which can be evaluated by an evaluation circuit (Fig. 1), result for the two sequences, whereas in the case of mistracking the numbers of pulses that can be evaluated for both sequences (S1 and S2; R and P) differ proportionally, a control signal being generated for the head positioning device (by means of which the magnetic head (21) can be moved back to its correct position) after the servo signal pattern (S) has been sensed, which control signal is dependent on the difference between the numbers of evaluatable pulses counted for both sequences, wherein (a) the servo signal pattern (S) is recorded in a data gap (DG) and only inside the track, (b) the pulse sequences of the servo signal pattern (S1 and S2; R and P) have an amplitude waveform which is dependent on the momentary head position and has a first descending portion and a second descending or ascending portion, and only signal pulses exceeding a minimum amplitude are evaluated by the evaluation circuit (Fig. 1), and (c) the arrangement for counting the evaluatable signal pulses is switched on in dependence on the output signals of a decoder (29) which recognizes the beginning and end of the servo signal pattern, and is switched off in the pause between two consecutive evaluations of the signal pulses.

2. An arrangement as claimed in claim 1, wherein the amplitude waveform of the pulse sequences of the servo signal pattern (S1 and S2; R and P) is triangular.

3. An arrangement as claimed in claim 1 or 2, wherein the pulse sequences of the servo signal pattern (S1 and S2; R and P) are produced via amplitude variations brought about by an increasing or decreasing write current.

4. An arrangement as claimed in claim 1 or 2, wherein the pulse sequences of the servo pattern (S1 and S2; R and P) are produced with different distances between flux changes by switching the write current on and off at irregular intervals.

5. An arrangement as claimed in claim 1, wherein the pulse sequences of the servo signal pattern (S1 and S2; R and P) are formed by partially erasing a pulse pattern (marker zone SS or SD) on the track (27) at an angle to the central axis of the track.

6. An arrangement as claimed in claim 1 or one of claims 2 to 5, wherein the pulse sequences of the servo signal pattern (S1 and S2; R and P) are separated from one another by an erased guard band (n1, n2).

7. An arrangement as claimed in one or more of claims 1 to 6, wherein several servo signal patterns (S) are provided on each magnetic track (27).

8. A magnetic disc record, particularly a floppy disc, for a head positioning servo arrangement as claimed in any of claims 1 to 7, several, particularly 26, servo signal patterns (S) being distributed along the length of a magnetic track (27).

21
22
23
24
25
26
20
DB
SR
DG
27
ID
IDG
DB
ST
S1
SS
S2
A
B
l1
l2
l3
l4
SR
S1
SD
S2
27
A
B
l1
l2
l4
l3

FIG.1

FIG.2

FIG.2a

FIG.2b

M
b
b
$S_1$
$S_2$
5b
b
$M_1$
$N_1$=N
1
2
3
4
5
6
7
8
9
10
F
K
$M_1$
$S_2$
$S_1$
N
KP
1
2
3
4
5
6
7
8
9
10
L

FIG.3a

FIG.3b

FIG.3c

ST
a
t
b
A
S
B
A
S
B
A
S
B
A
t
c
t
$T_1$
$T_2$
$T_1 + T_2$
$T_1 + T_2$
d
$T_3$
t
$Z_1 \times S$
$Z_2 \times S$
A
A
A
f
t
e
A
B
A
B
A
B
$Z_2 \times S$
$Z_1 \times S$
$Z_2 \times S$
$Z_1 \times S$
$Z_2 \times S$
$Z_1 \times S$
t
28
29
$l_5$

FIG.4

FIG.5

21
26
29
DEC
30
C
−
+
34
POS
33
MOT
>
>
32
31

FIG.6

r
p
27
R
$n_1$
Q
$n_2$
A
B
U
P
u
ø
t

FIG.7a

FIG.7b